(19)

**Europäisches Patentamt**
**European Patent Office**
**Office européen des brevets**

(11) **EP 4 645 718 A1**

(12) # EUROPEAN PATENT APPLICATION

(43) Date of publication:
**05.11.2025 Bulletin 2025/45**

(21) Application number: **24172934.2**

(22) Date of filing: **29.04.2024**

(51) International Patent Classification (IPC):
***H04B 11/00*** (2006.01)    ***H04B 13/02*** (2006.01)

(52) Cooperative Patent Classification (CPC):
**H04B 13/02; H04B 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Havguard AS**
**8370 Leksnes (NO)**

(72) Inventor: **Deschamps de Paillette, Thierry**
**8370 LEKSNES (NO)**

(74) Representative: **AWA Sweden AB**
**Box 5117**
**200 71 Malmö (SE)**

(54) **METHOD AND DEVICE FOR SELECTING UNDERWATER COMMUNICATION MODE**

(57)    The present invention relates to a method of determining a preferred communication mode and communication parameter for an underwater data transmission to be sent between transceiver nodes, using either one of at least a first communication mode and a second communication mode, being two different modes out of the group of an acoustic communication mode, an electromagnetic communication mode, and an optical communication mode. The first transceiver node is connected to a sensor unit configured to measure at least one environmental parameter. The method comprises the step of, using a neural network, determining a preferred communication mode for the transmission and at least one transmission parameter. Input to the neural network is based on: at least a first measurement data value of the environmental parameter from the sensor unit; a communication channel characteristic for each of the at least two communication modes for a communication channel between the transceiver nodes; and a network characteristic based on feedback information from one or more node in the underwater communication network.

*Fig. 1*

**Description**

Technical Field

The present disclosure relates to a method and device for underwater communication, and especially for selection of communication mode for a transmission in an underwater communication network.

Background

Wireless underwater communication has particular difficulties. The criterions and their associated metrics may be defined as follows:

1. Effective Transmission Range at a given emission power,
2. Deployment efficiency taking in account

◦ Energy consumption,
◦ Communication sensitivity to potential obstacles,

3. Emission duration that should be minimum and is equivalent to maximize the effective data rate (with the lowest possible error rate for a given transmission channel),
4. Environmental compatibility (or stealth) taking in account:

◦ Probability of third party or fauna impact or detection easiness at a given emission power,
◦ Probability of third party or fauna impact or detection easiness at a given frequency band usage,
◦ Probability of exposition duration impact or detection easiness by a third party or fauna.

Those 4 main criterions should be maximized to perform the best communication in underwater environment but may lead to operational contradiction. It means that there is no ideal way to transmit data underwater and a compromise may need to be found. The problems come from the fact that different modes of communication does not have the same performances but are highly complementary regarding the criterions.
It is therefore a need for a solution in communication quality of service to provide a system able to find a suitable mode for wireless communication in an underwater communication network.

Summary

It is an object of the present invention to provide an improved solution that alleviates the drawbacks with present devices. Furthermore, it is an object to provide a solution where a communication mode selection method is provided by a transceiver node taking in account the complex set of criterions to find the best compromise to select communication mode and transmission characteristic used to wirelessly transmit data between two network nodes.
The invention is defined by the appended independent claims, with embodiments being set forth in the appended dependent claims, in the following description and in the drawings.
According to a first aspect of the invention a computer-implemented method of determining a preferred communication mode and communication parameter for an underwater wireless data transmission to be sent from a first transceiver node to a second transceiver node in an underwater communication network is provided, wherein the first transceiver node is configured to transmit data using either one of at least a first communication mode using a first transmission unit and a second communication mode using a second transmission unit, and wherein the first and second communication modes are two different modes out of the group of an acoustic communication mode, an electromagnetic communication mode, and an optical communication mode. The first transceiver node comprises or is communicatively connected to at least one sensor unit configured to measure at least one environmental parameter at the first transceiver node. The first transceiver node comprises a processing unit, and the method comprises the step of, by the processing unit using a neural network, determining a preferred communication mode for a first transmission of data to the second transceiver node and at least one transmission parameter for the first transmission. Input to the neural network is based on: at least a first measurement data value of the at least one environmental parameter from the at least one sensor unit; a communication channel characteristic for each of the at least two communication modes for a communication channel between the first transceiver node and the second transceiver node; and a network characteristic based on feedback information from one or more node in the underwater communication network.
By using such method, the first transceiver node may be able to determine the most optimal communication mode to use for a transmission to the second transceiver node. The second transceiver node may be any node in the underwater communication network. One or more of the at least one sensor unit may be embedded in the first transceiver node. One or more of the at least one sensor unit may be communicatively connected to the first transceiver node via a wired or wireless connection. The measurement data value from the at least one sensor unit may be used as input value to the main neural network, or used to determine an input value to the main neural network.

The performances of different communication modes may vary upon time with various water parameters (e.g. salinity, temperatures, turbidity) or aera activities (e.g. traffics, obstacles, pollution).The described embedded neural network driven method may aim to select between optical, acoustic or electromagnetic modes and the associated emission power.

The main neural network may be fed by channels availability states and transmission quality criterion such as stealth, range, data rate and emission power efficiency estimations. The main neural network may use an original Multi Objective Hierarchical Reinforcement Learning algorithm process, which may be configured for a Q-learning process.

The first transceiver node may be configured to dynamically adapt the communication mode and transmission parameter (e.g. emission power) to:

1. Maximize stealth of the data transmission
2. Minimize emission power
3. Minimize emission duration
4. Minimize transmission errors

The main neural network may be configured to find the best compromise between communication mode and transmission parameter given the environmental state and time. This may be done continuously for each transmission to be sent from the first transceiver node.

The method may further comprise steps of selecting the determined communication mode and transmission parameter and transmitting data to the second transceiver node using the selected communication mode and transmission parameter.

The first transceiver node may be configured to transmit data using either one of an acoustic communication mode using an acoustic transducer, an electromagnetic communication mode using an electromagnetic transducer and an optical communication mode using an optical transducer. The first and second transmission units may thereby each be either one of said transducers.

The at least one sensor unit may be configured to measure a plurality of environmental parameters out of the group of: temperature at the first transceiver node; turbidity at the first transceiver node; pressure at the first transceiver node; linear acceleration of the first transceiver node; angular acceleration of the first transceiver node; ambient magnetic excitation field at the first transceiver node; and conductivity in the water at the first transceiver node. The first transceiver node may comprise or be communicatively connected to a plurality of sensor units configured to measure said plurality of environmental parameters. Each sensor unit may be configured to measure one or more of said environmental parameters. The linear and angular accelerations may be measured by an MPU sensor unit.

The communication channel characteristic may comprise at least a first communication channel characteristic for the first communication mode and a second communication channel characteristic for the second communication mode, and each communication channel characteristic may comprise an ambient noise frequency spectrum for the respective communication mode.

The network characteristic may comprise feedback data from previous transmissions received by the first transceiver node from a plurality of nodes in the underwater communication system.

The feedback data may comprise a Received Signal Strength Indicator, RSSI, message transmitted as an answer by at least one node in the underwater communication system. The RSSI message may provide an evaluation of a previous message transmission said at least one node received from the first transceiver node.

The main neural network may be provided with a mode availability indicator for each of the at least first and second communication modes, and the mode availability indicators may each be determined based on the at least one first measurement data value of the at least one environmental parameter from the at least one sensor unit, the communication channel characteristic for each of the at least two communication modes for a communication channel between the first transceiver node and the second transceiver node, and the network characteristic based on feedback information from one or more node in the underwater communication network.

The at least one first measurement data value may be used to determine a channel attenuation model for a communication channel of each communication mode, which channel attenuation model may be used for the determination of mode availability indicator.

The communication channel characteristic for each communication mode may comprise an energy ambient noise spectrum in said communication channel which may be used for the determination of mode availability indicator.

The network characteristic may comprise a communication channel identification pulse feedback for a previous transmission between the first transceiver node and the second transceiver node for the communication mode and/or an emission power used for said transmission.

The mode availability indicator, for each communication mode, may be determined using a neural network.

For each mode availability indicator a neural network may be used which may be provided with input data in the form of energy ambient noise spectrum in the communication mode, communication channel identification pulse feedback for a previous transmission, emission power for said transmission, and channel attenuation model for a communication channel in the communication mode. The neural network may output a mode availability indicator value. The input data to the neural network may be normalized before being provided to the neural network.

To the main neural network, it may be provided one to four transmission criterions that should be maximized, the transmission criterions being out of the group of data rate efficiency, energy efficiency, range efficiency and stealth efficiency. The main neural network may be configured to maximize all of the used transmission criterions at the same time. The maximizing may involve compromising between maximizing the different transmission criterions.

The transmission criterions may be estimated using current state and measurements.

Data rate efficiency: this criterion may provide the used data rate of the last transmission in a communication mode. The data rate efficiency may be giving the decimal logarithm of the used data rate for the last transmission in

$$Data\ rate\ efficiency = 10.Log(DR_i^m)$$

communication mode m: . The data rate, DR, for the last transmission may be stored in the first transceiver node.

Energy efficiency: this criterion may be equal to the RSSI feedback information in the last used communication mode on the emission power, Pt, used to transmit the previous message in this communication mode:

$$Energy\ efficiency = \frac{rssif_i}{Pt_{Tot_i}^m}$$
.

Range efficiency: this criterion may be equal to the last used communication mode range default score. Following the prior assumption this score may be defined by the default range that may be expected from experience at the maximum data rate used during some experience, for example:

- If optical mode was used in the previous communication:

  - *Range efficiency* = 50

- If electromagnetic mode was used in the previous communication:

  - *Range efficiency* = 10

- If acoustic mode was used in the previous communication:

  - *Range efficiency* = 200

Stealth efficiency:

- If optical mode was used in the previous communication:

  $$Stealth\ efficiency = 10^{-3}.DR_i^m.Energy\ efficiency$$

- If electromagnetic mode was used in the previous communication:

  $$Stealth\ efficiency = 10.DR_i^m.Energy\ efficiency$$

- If acoustic mode was used in the previous communication:

  $$Stealth\ efficiency = DR_i^m.Energy\ efficiency$$

The transmission criterions may thereby be determined based on information on a previous transmission in the underwater communication network, between the first transceiver node and another node in the network. The information may be stored in the first transceiver node, or received by the transceiver node from another network entity.

The data provided to the main neural network may be normalized prior to being used by the main neural network.

The main neural network may be configured to output a communication mode selection, and a transmission power level of the selected communication mode. The communication mode and transmission power level may be selected in order to maximize the transmission criterions.

The main neural network may be configured to output estimated state values of the parameters being provided to the main neural network.

The first transceiver node may be configured to transmit data using either one of the first communication mode, the second communication mode, and a third communication mode, wherein the three communication modes are acoustic communication mode, electromagnetic communication mode and optical communication mode.

According to a second aspect of the invention, there is provided a transceiver node of an underwater communication network configured to transmit data to a second transceiver node in the network using either one of at least a first communication mode using a first transmission unit and a second communication mode using a second transmission unit, wherein the first and second communication modes are two different modes out of the group of an acoustic communication mode, an electromagnetic communication mode, and an optical communication mode. The transceiver node comprises or is communicatively connected to at least one sensor unit configured to measure at least one environmental parameter at the first transceiver node. The transceiver node comprises a processing unit configured to by using a main neural network, determine a preferred communication mode for a first transmission of data to the second transceiver node and at least one transmission parameter for the first transmission. Input to the main neural network is based on: at least a first measurement data value of the at least one environmental parameter from the at least one sensor unit; a communication channel characteristic for each of the at least two communication modes for a communication channel between the first transceiver node and the second transceiver node; and a network characteristic based on feedback information from one or more node in the underwater communication network. The transceiver node of the second aspect may correspond to the first transceiver node as presented for the first aspect above. The features of embodiments of the computer-implemented method presented above are equally applicable to the transceiver node.

The main neural network may use an original Multi Objective Hierarchical Reinforcement Learning algorithm process fed by channels availability states and transmission quality criterion such as stealth, range, data rate and emission power efficiency estimations used as an environment state vector.

The main neural network of the first communication mode may be using several input parameters and process it to select the estimated optimal way to transmit data between the communication nodes.

To do that, the system architecture and protocol stack may match one or more of the following assumptions: All the required input parameters needed may be accessible to the main neural network at the moment it determine the selection. The main neural network may have a training process that is efficient enough to actually improve the desired criteria, meaning those criteria are measurable and have quantitative metrics. The first transceiver node may have the ability to execute the result of the selection. Meaning that the actuators and connected effectors may be controlled and driven with accuracy according to the selected parameters. It may mean that if a system is considered where three modes of communication may be addressed using three associated modems or transducers and that each central frequency is known, and the maximum emission power of each modem may be controlled.

The used protocols and associated modulation schemes and parameters may be known and realizable by the embedded electronics and transducers used by the emitter and receiver side of the communication nodes.

A Multimodal Network Node link protocol layer may integrate an acknowledgement mechanism that transmit the Received Signal Strength Indicator, RSSI, and if there was an error detected in the previous received packet message. This may be provided by a cyclic redundancy check error code. The protocol stack may answer to short identification pulses to identify a node in any of its communication modes. The link and status data may be stored in a node embedded timestamped small database.

The first transceiver node may embed a low drift and temperature compensated clock and a stable time base able to deliver a proper timestamp (date and time).

Each communication mode may have its own default transmission range performance and may be classified with this assumption rule: acoustic mode range > optical mode range > electromagnetic mode range.

Each communication mode may have its own default transmission stealth performance and may be classified with this assumption rule: acoustic mode range < optical mode range < electromagnetic mode range.

Each communication mode may have its own data rate performance and may be classified with this assumption rule: optical mode data rate > electromagnetic mode data rate > acoustic mode data rate.

The output of the main neural network may be defined of its associated parameters, and may be called an output control space:

- The possible communication modes:

    ○ The available communication modes may be defined as a finite set of possible communication modes available in the first transceiver node and noticed $\Omega_{modes}$, that contain three elements: Acoustic (A), Electromagnetic (M) and Optical (O).
    ○ Only one of those modes may be used at a time t.
    ○ The set of communication modes may thereby be noticed: $\Omega_{modes} = \{A; M; O\}$.

- The determined emission power for the transmission in the selected communication mode. Each modulated carrier affected to its frequency band may carry a certain amount of Energy $Et_k^m$ during the transmission time $Te_k^m$ used to emit a data packet at the effective transmission power $Pt_k^m$.

    ○ $Pt_k^m$ belongs to a subset of the output control space noticed $\Omega_P^m = \bigcup_{k=1}^{k=N} P_k^m$

    ○ Hence: $Et_k^m = \int_{t_0}^{t_0+Te_k^m} Pt_k^m . dt$ where $t_0$ is the time start of the transmission

    ○ Where the transmission power $Pt_k^m \in \mathbb{R}$.

    ○ The total power used to transmit a packet at time t in a given communication mode m may be defined by $Pt_{Tot}^m = \sum_{k=1}^{k=N} Pt_k^m \in \mathbb{R}$ and is seen as controllable.

The total output control space $\Omega_{Output}$ may then be defined as:

    ○ $\Omega_{Output} = \Omega_{modes} \cup \Omega_P^m$

To optimize all the transmission criterion for the first transmission between the first transceiver node and the second transceiver node, and determine a preferred communication mode and transmission parameter, the main neural network must have access to input data. Such data may be measured or estimated to build an input state vector that belongs to what may be called an input state space. The input state space may be considered and used as an observable space.

The input state space may be a combination of three groups of input subspaces: The local measurement space, The channel measurement identification space, and The network feedback space.

The local measurement space may comprise at least one measurement data value of a measurement data parameter. The at least one measurement data value may be provided by one or more sensor units. The one or more sensor units may be provided in the first transceiver node, or communicatively connected to the first transceiver node. The local measurement space may comprise a plurality of measurement data values of respective measurement data parameters. The plurality of measurement data parameters may be measured on, at, or around the first transceiver node, or otherwise externally the first transceiver node by a remote sensor unit. The measurement data parameters may be one or more out of the group of:

    ○ The local conductivity in the water at the first transceiver node. The conductivity may be evaluated at a discrete time $t_k$ around the first transceiver node and may be associated to a scalar real discrete timestamped number $M_{cond}^{t_k} \in \mathbb{R}$.
    ○ The temperature at the first transceiver node. The temperature may be evaluated at a discrete time $t_k$ around first transceiver node and may be associated to a scalar real discrete timestamped number $M_{temp}^{t_k} \in \mathbb{R}$.
    ○ The turbidity in the water at the first transceiver node. The turbidity may be measured at the used optical frequencies and evaluated at a discrete time $t_k$ around the first transceiver node. It may further be associated to a scalar real

$$M^{t_k}_{turb} \in \mathbb{R}.$$

discrete timestamped number .

◦ The pressure in the water at the first transceiver node. The pressure may be evaluated at a discrete time $t_k$ around the

$$M^{t_k}_{press} \in \mathbb{R}.$$

first transceiver node. It may further be associated to a scalar real discrete timestamped number .

◦ The current linear acceleration of the first transceiver node. The linear acceleration may be evaluated at a discrete time $t_k$ on the three orthogonal axis vectors (x, y, z) associated to the Galilean reaper of the first transceiver node and

$$M^{t_k}_{acc} = \left[ A^{t_k}_x, A^{t_k}_y, A^{t_k}_z \right] \in \mathbb{R}^3$$

may be represented with a 3-coordinate vector .

◦ The current angular acceleration of the first transceiver node. The angular acceleration may be evaluated at a discrete time $t_k$ around the three orthogonal axis vectors (x, y, z) associated to the Galilean reaper of the first

$$M^{t_k}_{gyr} = \left[ G^{t_k}_x, G^{t_k}_y, G^{t_k}_z \right] \in \mathbb{R}^3$$

transceiver node and may be represented with a 3-coordinate vector

◦ The current local ambient magnetic excitation field ($B^{tk}$) at the first transceiver node. The magnetic excitation field may be evaluated at a discrete time $t_k$ in the directions of the three orthogonal axis vectors (x, y, z) associated to the Galilean reaper of the first transceiver node and may be represented with a 3-coordinate vector

$$M^{t_k}_{mag} = \left[ B^{t_k}_x, B^{t_k}_y, B^{t_k}_z \right] \in \mathbb{R}^3 .$$

◦ The estimated speed of sound $c^A_{min}$, determined using the measured pressure, temperature and conductivity.

The physical values measured by the one or more sensor units may basically be expressed in a physical unit. However, the measurement data values may be normalized in a range after been acquired and prior to being provided to the main neural network.

The channel measurement identification space may comprise a communication channel characteristic for the available communication modes $\Omega_{modes}$ = {A; M; O}. The channel measurements may involve the transducers and its associated electronics and software used for each communication mode in the first transceiver. The one or more channel measurements that may provide the channel characteristic in the channel measurement identification space may be the ambient noise frequency spectrum in communication mode m. Using the transducer and its receiver electronics for a certain communication mode in the first transceiver, this spectrum may associate to the total available frequency bands for

$$\Delta F^m_{receiver} = [f_{min} , f_{max}]_m,$$

communication mode m, which may be noted . The noise power frequency spectrum

$$T^m_{noiselisten}$$

may be determined during a listening time interval . This listening time may be done in a passive way a long time after the last emission to avoid any remaining echoes side effects in any of the communication channels of a mode m. The noise frequency spectrum may be a discrete spectrum that may estimate for each discrete frequency

$$f_{knoise} \in \Delta F^m_{receiver}$$

the ambient noise power magnitude at this frequency, notice

$$\mathrm{P}^m_{fknoise} = \sqrt{X_{Rnoise}^2 + X_{Inoise}^2} \in \mathbb{R}$$

and its phase $\varphi^m_{fknoise} \in \mathbb{R}$ , where:

$$X_{Rnoise} + j X_{Inoise}$$

$\in \mathbb{C}$ *is the complex component of the noise spectrum at* $f_{knoise}$

The minimum delay between the last emission may be determined using the lowest propagation speed $c^m_{min}$ of all modes m. A minimum delay time of 20 seconds to avoid any echoes or interference protocols may in some embodiments be preferred. This ambient noise spectrum measured at time $t_k$ and the root mean square average of this noise determined using the Parseval's theorem applied to the DFT coefficients may be stored and may be noted

$$Ms^{t_k}_{ambientnoise}.$$

The network feedback space may be used to determine, store and/or analyze feedback received by the first transceiver node from one or more other nodes in the underwater communication network. The feedback may be received in data frames sent by the respective one or more nodes in the underwater communication network to the first transceiver node.

  ○ Identification pulses: When a node movement is detected using a sensor unit, or if a last transmission attempt did not receive any acknowledgment or feedback, a process may try to send a channel identification pulse to find an appropriate second transceiver node. The pulse identification may be a very short message containing a specific payload encoding used to receive feedback information, such as Received Signal Strength Indicator, RSSI. The identification pulse may be emitted at full power starting from the shortest range to the greater range communication mode. Once a second transceiver node is receiving this identification pulse, it may reply with a message that contains its RSSI feedback, RSSI-F. This RSSI-F may help to estimate a communication channel availability for the communication mode.

  ○ The Received Signal Strength Indicator Feedback (RSSI-F): Each acknowledgment frame received by the first transceiver node from the second transceiver node in the network may contain an evaluated RSSI of the last received signal during the last transmission. This feedback may help the first transceiver node to evaluate if the emitting power was well adjusted to transmit the last frame. Knowing the last emission power used to transmit the last frame, this information may help to evaluate the distance between first transceiver node and the second transceiver node. This information may be providing a timestamped *tuple:*

$$rssif_i^m = \left\{ id, rssif_i, Pt_{Tot_i}^m \right\},$$

, where:

  ▪ id, is the second transceiver node identifier,
  ▪ *rssif_i,* is the last RSSI evaluation from the node id. If after a timeout delay, no message is received, then *rssif_i* = -1
  ▪ $Pt_{Tot_i}^m$, is the emission power used prior getting the last feedback in communication mode m from node id.

  ○ The effective data rate used for the last successful transmission in communication mode m: $DR_i^m$ expressed in kbps.

The first transceiver node may use a Multi Objective Hierarchical Reinforcement Learning algorithm as the main decision-making process. The main agent may use an artificial multilayered neural network.

This perceptron may be inserted in a sequential stochastic estimation process chain that implement the main agent policy which drives the core decision making system.

The output of the main neural network process may deliver the appropriate actions such as communication mode to be used and the transmission parameter (e.g. emission power) to achieve the estimated optimal transmission between the first and second transceiver nodes.

The training of the neural networks used in each communication channel availability estimators may be provided by previous measurement of communication behaviors in each mode in various situations. Those experience samples may be compared to theorical assumptions and are mixed to be labelled manually regarding a performance score described for each node.

Whatever is the chosen agent's policy, the neural network must be trained, and the chosen policy may maintain the possibility to explore the state space even after a long period of training as a given transceiver node in the network should learn and improve its behavior over time.

The training of the neural network may also be done offline based on realistic simulations where dataset of measurements or situations may be provided by prior measurement campaigns or previous published data.

A reward vector R has a set of components corresponding to each of the four evaluated communication quality criterion. The value of those reward vector components may be directly those criterion values or any derivation. A scalarization may be done by weighted summation of all the criterion followed by normalization. Such solution may not be optimal as it may lead to the loss of information to help to distinguish the right action to provide to optimize a given criterion.

Each of this reward component value may be computed easily and directly from the evaluated criterion but may be scaled according to the learning hyper-parameters and convergence properties.

The behavior and the variational conditions of a given environment where the communication node is deployed is difficult to predict. The system may not need to meet all the examples to be trained efficiently. The rewards used to improve the communication quality criterion may be computed.

A simulated environment may be used to initially train the main RL algorithm where the several inputs states vector can be provided according to some events that can represent real life situations.

The goal of the training is to select the best way of communication given an environment state vector. This state vector may be linked to the physical environment using sensor information through channel availability state vector and previous communication feedback.

Brief Description of the Drawings

The invention will in the following be described in more detail with reference to the enclosed drawings, wherein:

Fig. 1 shows a schematic illustration of a transmission between a first transceiver node and a second transceiver node.
Fig. 2 shows a block scheme of a first transceiver node according to an embodiment of the invention.
Fig. 3 shows a block scheme of a process according to an embodiment of the invention.
Fig. 4 shows a block scheme of a process of determining mode availability according to an embodiment of the invention.
Fig. 5 shows a block scheme of a process of determining mode availability according to an embodiment of the invention.
Fig. 6 shows a block scheme of a process of determining mode availability according to an embodiment of the invention.
Fig. 7 shows a flow chart of a process according to an embodiment of the invention.

Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

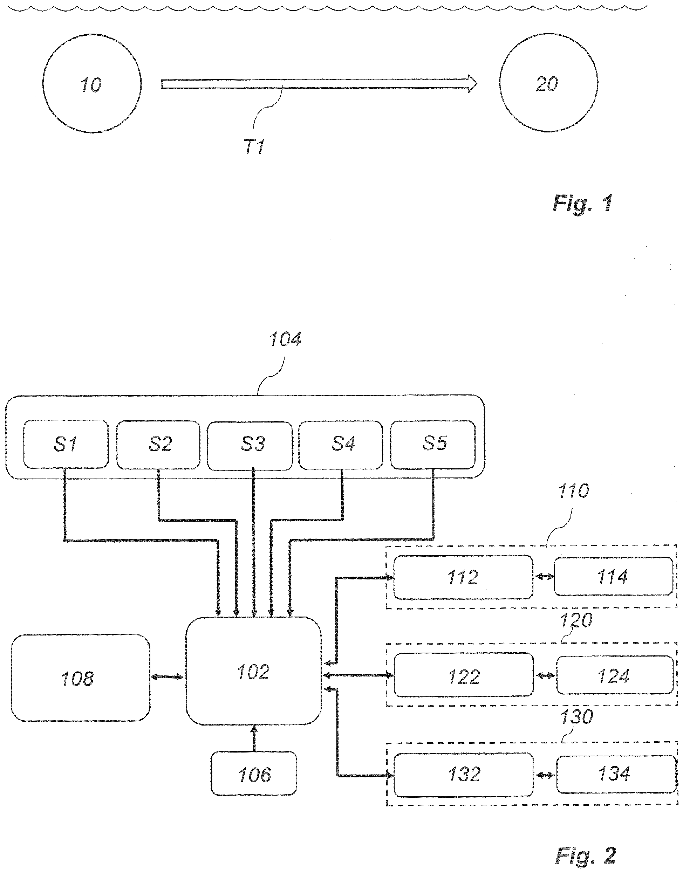

Fig. 1 illustrates the general principle of the invention, wherein a first transceiver node 10 in an underwater communication system is set out to send a transmission T1 to a second transceiver node 20.

The invention may aim to transmit a digital message between the first transceiver node 10 and the second transceiver node 20. This may be done by the first transceiver node 10 using multimodal modems, local measurements and network feedbacks. The first transceiver node 10 may dynamically adapt the emission power and communication mode to:

1. Maximize stealth of the data transmission
2. Minimize emission power
3. Minimize emission duration
4. Minimize transmission errors

The architecture of the first transceiver node 10 and its embedded modems is schematically illustrated in Fig. 2.

The first transceiver node 10 is configured to transmit signals using three different communication modes, an acoustic communication mode 110, an electromagnetic communication mode 120 and an optical communication mode 130. The first transceiver node 10 comprises three respective modems: an acoustic modem 112, an electromagnetic modem 122 and an optical modem 132. Each modem 112, 122, 132 uses a respective transducer for the transmission in the communication mode 110, 120, 130, i.e. an acoustic transducer 114, an electromagnetic transducer 124 and an optical transducer 134. The transmission T1 may be sent from the first transceiver node 10 using one of the transducers 114, 124, 134 with a determined emission power for the transmission.

The three modems 112, 122, 132 associated to each communication mode (acoustic, electromagnetic or optical) 110, 120, 130 are controlled by a control unit 102. The control unit 102 execute an AI algorithm to select communication mode 110, 120, 130 and emitting power $Pt_{Tot}^{m}$ in each communication mode prior to emitting data to send to the selected modem 112, 122, 132.

The first transceiver node 10 further either comprises or is communicatively connected to a plurality of sensor units 104. In the illustrated embodiment there are five sensor units S1-S5. The sensor units S1-S5 may be embedded in the first transceiver node 10, or communicatively connected to the first transceiver node 10, such as via a wired or wireless connection. Among the plurality of sensor units 104 there may be a mix of embedded and external sensor units. The sensor units S1-S5 may comprise sensor units configured to measure one or more of turbidity in the water at the first transceiver node 10, water temperature at the first transceiver node 10, water conductivity at the first transceiver node 10, pressure at the first transceiver node 10, and linear and/or angular velocity of the first transceiver node 10. The measurements from the plurality of sensor units 104 are used by the control unit 102 as input for the determination of preferred communication mode 110, 120, 130 and emitting power.

The first transceiver node 10 may further comprise an interface 108 towards other devices.

The first transceiver node 10 may further comprise an energy sensor 106. The energy sensor may measure energy based on current and voltage measurement. The product of current and voltage sent to the transducers 114, 124, 134 may be used to evaluate the electrical power used by the transducer 114, 124, 134. The energy may be deduced by the integration of the root mean square of this product across time.

Further, as will be further discussed below, feedback from previous transmission between the first transceiver node 10 and neighbor network nodes, such as the second transceiver node 20, are also used as inputs of the AI algorithm.

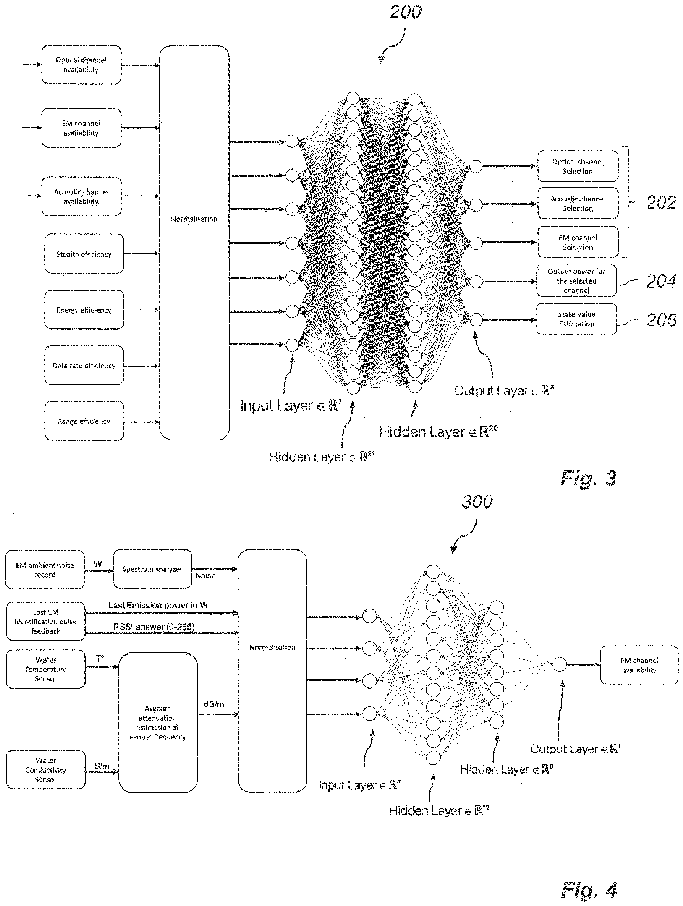

Fig. 3 illustrates a schematic block scheme of process of determining a selected communication mode, output power and (optionally) a state value estimation. A main neural network 200 is provided with a number of input values to an input layer. In the illustrated examples there are 7 nodes in the input layer. The output layer of the neural network comprises 5 nodes representing the (binary) selection of each of the communication modes 110, 120, 130, the output power for the selected communication mode, and the state value estimation.

The outputs of the main neural network 200 may be divided in 3 categories. The communication mode selection, one output for each communication mode (in this example three modes of communication: Optical, Acoustic, Electromagnetic). The dedicated output of each communication mode 110, 120, 130 may be viewed as the valuation of the choice of this communication mode to transmit the next data frame. The more this value is high the more this communication mode should be used. If an actor-critic strategy is applied to the agent that output may directly select the communication mode (in this case a "Softmax" activation function may be used between those outputs). In case of deep action-value function learning network strategy (DQN), the outputs are the predicted action values that may be used to select the best action at a given state.

The emission power output express the normalized power that should be applied to the selected communication mode. This emission power output may be reduced to only one output that may take a scalar value proportional to the effective power that should be applied to send the message on the selected communication mode emitter. In this embodiment the activation function of the output neuron may be linear.

A set of neurons may in some embodiments each be corresponding to a different predefined discrete value proportional to a given emission power. The neuron having the highest output value may be selected using a "Softmax" function between them. The selected neuron may then correspond to a fixed proportional value of the effective emission power to apply during the emission of the data.

In some embodiments, an optional estimated states value may be output from the neural network 200. This estimated state value may be used to estimate the quality of a previous decision and may be used to optimize the training process in an actor-critic approach. The estimated state value may be a scalar value or a separate vector. This option may be used only in some reinforcement learning agent strategies, such as actor-critic. In this embodiment the estimated states value output may be represented by either:

- a scalar value that may correspond to the estimation of a utility function of a given state vector. This monotonically increasing utility function may be defined as a weighted sum of the components of the predicted state value vector. In one embodiment only one output neuron may be used with a linear activation function. Or
- a set of neurons, each of them corresponding to the estimated value state function. In this embodiment the activation function may be linear or non-linear (e.g. ReLu, Atan...) depending on distortion expected in the chosen algorithm to improve convergence of the training.

The estimated state value may be a linear weighted combination of the four communication criterions, or a simple renormalized copy of the four criterions evaluation provided at the input of the main neural network. The option of a renormalized copy may be better to separate action vector to effect on the action choice, but it may be a more complex algorithm to implement.

The described Multi Objective Hierarchical Reinforcement Learning generic architecture shown in fig. 3, may offer the ability to implement various reinforcement learning strategies.

The number of neurons and layers may vary and may be increased to optimize accuracy. In the illustrated embodiment, the main neural network 200 comprises 53 nodes and 667 edges.

The first transceiver node 10 may use a Multi Objective Hierarchical Reinforcement Learning algorithm as the main decision-making process. The main agent may use an artificial multilayered neural network.

This perceptron may be inserted in a sequential stochastic estimation process chain that implement the main agent policy which drives the core decision making system.

The output of this main neural network 200 process may deliver the appropriate actions such as selection of communication mode 110, 120, 130 to be used and the emission power to achieve the estimated optimal transmission between the first and second transceiver nodes 10, 20.

The neural network may be pretrained offline in a simulated environment. Once this neural network is pretrained it may be continuously running the reinforcement learning process in real environment above the bias to perform a permanent improvement of the system performance. This may ensure adaptability in a given deployment environment to accurately adapt communication parameters to improve pre-trained behaviors.

The neural network 200 is in the illustrated embodiment using seven information inputs to feed its input layer used as environment state vector for the Reinforcement Learning agent. As illustrated in fig. 3, the input values to the neural network 200 may be normalized prior to being provided to the input layer of the neural network 200.

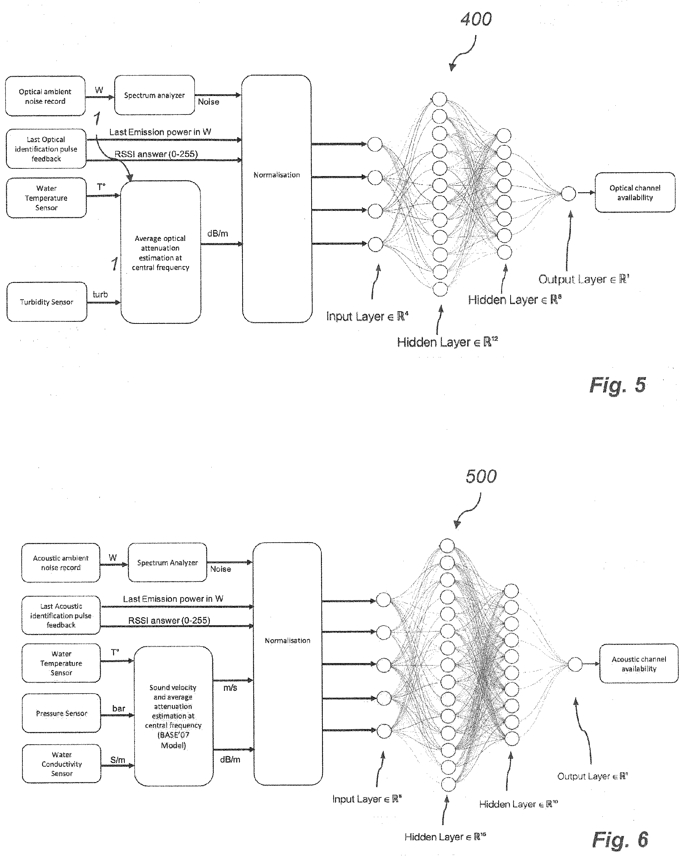

Three communication channel availability estimations are provided as input to the neural network 200. For each communication mode 110 ,120, 130 a channel availability is estimated. Those channel availability estimations are performed by three states shown in figs. 4-6 and further described below. The channel availability is estimated based on corresponding communication channel attenuation models determined based on local measurements done prior the estimation by a sequential process. Such local measurement may be the root mean squared of the energy ambient noise in the communication channel, and active channel identification pulses feedback in the communication mode.

Further, determined scalar values may represent the components of a multicriteria reward vector corresponding to each of the 4-transmission criterion that should be maximized, and provided as input to the neural network 200:

- ◦ Data rate efficiency
- ◦ Energy efficiency
- ◦ Range efficiency
- ◦ Stealth efficiency

The transmission criterions may be estimated using current state and measurement.

Data rate efficiency: this criterion may be giving the decimal logarithm of the used data rate for the last transmission in communication mode m 110, 120, 130: $Data\ rate\ efficiency = 10.Log(DR_i^m)$ .

Energy efficiency: this criterion may be equal to the RSSI feedback information in the last used communication mode 110, 120, 130 on the emission power used to transmit the previous message in this communication mode: *Energy efficiency* = $\dfrac{rssif_i}{Pt_{Tot_i}^m}$

Range efficiency: this criterion may be equal to the last used communication mode range default score. Following the prior assumption this score may be defined by the default range that may be expected from experience at the maximum data rate used during some experience, for example:

- ◦ If optical mode 130 was used in the previous communication:

  - ▪ *Range efficiency* = 50

- ◦ If electromagnetic mode 120 was used in the previous communication:

  - ▪ *Range efficiency* = 10

- ◦ If acoustic mode 110 was used in the previous communication:

  - ▪ *Range efficiency* = 200

Stealth efficiency:

- ◦ If optical mode 130 was used in the previous communication:

  - ▪ $Stealth\ efficiency = 10^{-3}.DR_i^m.Energy\ efficiency$

○ If electromagnetic mode 120 was used in the previous communication:

$$Stealth\ efficiency = 10 . DR_i^m . Energy\ efficiency$$

■

○ If acoustic mode 110 was used in the previous communication:

$$Stealth\ efficiency = DR_i^m . Energy\ efficiency$$

■

**Error! Reference source not found.**-6 illustrate the architecture for the determination of the electromagnetic, optical and acoustic transmission channel availability state (sometimes called oracle). The channel availability estimation is used to express the ability of the communication mode channel to send a message. It may in some embodiments be provided by a mathematical function or by using a fully connected neural network 300, 400, 500 as illustrated to provide a nonlinear heuristic value based on experiences or expectations. This availability state value may be delivered by a single output neuron using a linear activation function.

The advantage to use a neural network 300, 400, 500 is that the sensor units used to evaluate the channel properties, the power or the RSSI value may not need to be very accurate nor linear, but preferably have a monotonically growing function when the measured value is increasing.

In every communication mode or whatever the accuracy of the sensor units or the information is, the estimation is using the following parameters:

- An ambient noise record $|\ Ms_{ambientnoise}^{t_k}$ for the communication mode 110, 120, 130 in question. The ambient noise record may be a Shannon sampling of the communication mode channel noise during a time window long enough to provide an ambient noise spectrum analysis and an average energy of this noise.

- A RSSI feedback for the communication mode 110, 120, 130. The RSSI feedback may correspond to the last emission power used for the communication mode 110, 120, 130 to reach the first transceiver node 10 is used to estimate the energy on reception signal quality ratio required to reach the node 10. This may be used to estimate the potential presence of obstacles or range between the emitter and the receiver (e.g. first and second transceiver nodes 10, 20). The neural networks 300, 400, 500 may be fed with both the emission power used for the last identification pulse to the second transceiver node 20, and the RSSI answer received from the second transceiver node 20.

- A channel attenuation model is further determined and fed to the neural network 300, 400, 500. The channel attenuation model provides an average attenuation estimation at a central frequency for the transmission on the communication mode 110, 120, 130. The channel attenuation model may be based on:

　　○ For the electromagnetic mode channel: The attenuation model may be based on water conductivity $M_{cond}^{t_k}$ and temperature $M_{temp}^{t_k}$ to estimate the permittivity of seawater at the central frequency. To the neural network 300 the channel attenuation model provides an average attenuation estimation at the central frequency in dB/m.

　　○ For the optical mode channel: The attenuation model may be based on water turbidity $M_{turb}^{t_k}$ at the central wavelength and temperature $M_{temp}^{t_k}$ to estimate signal absorption at the central frequency. To the neural network 400 the channel attenuation model provides an average optical attenuation estimation at the central frequency in dB/m.

　　○ For the acoustic channel: The attenuation model may be based on water conductivity $M_{cond}^{t_k}$, ambient pressure $M_{press}^{t_k}$ and water temperature $M_{temp}^{t_k}$ to estimate signal absorption at the central frequency. To the neural network 500 the channel attenuation model provides an average attenuation estimation at the central frequency in dB/m, and a sound velocity estimation in m/s.

In the illustrated embodiments, the parameters are normalized to feed the neural networks 300, 400, 500. The size of this neural networks 300, 400, 500 may vary to adapt the accuracy. As seen in figs. 4-6, the neural networks 300, 400, 500 for the different communication modes 110, 120, 130 have a different number of nodes in the input layers and hidden layers.

The training of the neural networks 300, 400, 500 used for channel availability may be done using a labelled dataset that is associating the combination of the physically possible scalar value of each input parameters to the estimated channel availability.

The rule to evaluate this availability may be based on the idea that the more the channel attenuation is growing and the lowest is the previous RSSI and the higher is the emitting power and the ambient noise energy is high, the lowest is the channel availability.

Instead of using a neural network 300, 400, 500 to estimate the channel availability, a global algorithm with scalar function may be used, such as:

$$channel\ availability$$
$$= K.\left(\frac{RSSI\ feedback}{(channel\ attenuation).(previous\ emitting\ power).(ambient\ noise\ energy)}\right)$$

if RSSI feedback > 0 else 0.

Note that if RSSI is negative one (no received message) the channel availability is set to 0.

The linearity and the scale factor are not easy to fix a priori, and a normalization may be done to associate a score to this function to provide a more accurate result and to use it to generate a dataset with some existing measurements or examples.

The technology of all the sensor units may be adapted to any implementation requirements and low accuracy or linearity, but each of those sensor units may need a good repeatability with a monotonically increasing quantification transfer function between the physical measured value and the digital corresponding value used by the algorithm.

The stochastic gradient descent may be used to train the network and a simple Adam optimizer may run well with an artificial dataset to obtain a convergent.

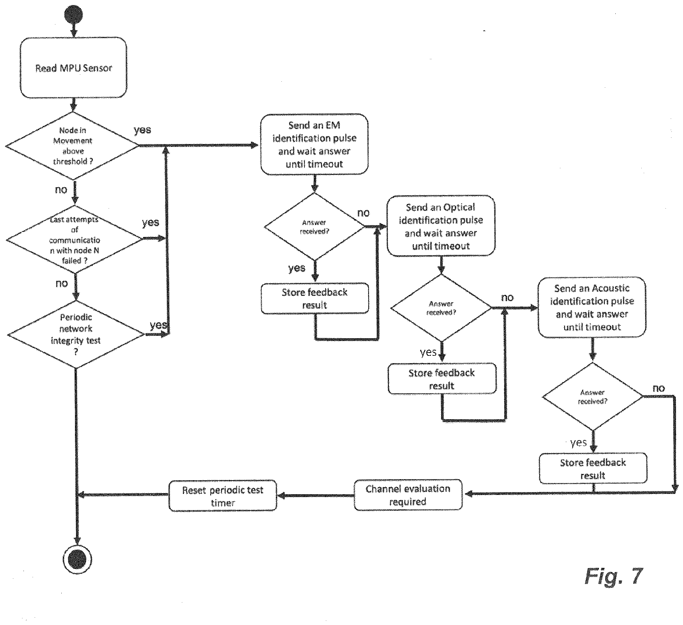

A node, such as the first transceiver node 10, in the underwater communication network may perform a method as illustrated in fig. 7, which uses identification pulses to retrieve feedback from another node in the network, such as a second transceiver node 20. The first transceiver node 10 uses measurements from one or more sensor units 104 to determine if a movement of the first transceiver node 10 is detected, if the last attempts of communication with the second transceiver node 20 failed, and/or if no message has been sent to the second transceiver node 20 for a period of time. If either of the criterions are true, the first transceiver node 10 may initiate an identification pulse scheme. The determination of a movement may be done by reading the MPU sensor unit, i.e. the accelerator and/or gyroscope sensor. For each of the communication modes 110, 120, 130, a respective identification pulse is sent to the second transceiver node 20. If a feedback response from the second transceiver node 20 is received for a first communication mode the feedback result for that communication mode is stored in the first transceiver node 10. After storage of the feedback result for the first communication mode, or if no feedback response has been received after a predetermined time period, an identification pulse is sent to the second transceiver node 20 in a second communication mode. The same procedure may be repeated for the second communication mode, and thereafter for the third communication mode. In the illustrated embodiment the consecutive order is electromagnetic communication mode 120, optical communication mode 130 and acoustic communication mode 110, but may in other embodiments be in another order.

The outcome of the above steps may be used in the process of determining communication mode channel availability using the neural networks 300, 400, 500 as discussed above.

After feedback result has been received for all communication modes, a timer for the time period in which no message has been sent may be reset.

In the drawings and specification, there have been disclosed preferred embodiments and examples of the invention and, although specific terms are employed, they are used in a generic and descriptive sense only and not for the purpose of limitation, the scope of the invention being set forth in the following claims.

**Claims**

1. A computer-implemented method of determining a preferred communication mode and communication parameter for an underwater data transmission (T1) to be sent from a first transceiver node (10) to a second transceiver node (20) in an underwater communication network,

wherein the first transceiver node (10) is configured to transmit data using either one of at least a first communication mode using a first transmission unit and a second communication mode using a second transmission unit,

wherein the first and second communication modes are two different modes out of the group of an acoustic communication mode (110), an electromagnetic communication mode (120), and an optical communication mode (130),

wherein the first transceiver node (10) comprises or is communicatively connected to at least one sensor unit (S1-S5) configured to measure at least one environmental parameter at the first transceiver node (10), and wherein the first transceiver node comprises a processing unit (102),

the method comprising the step of:

by the processing unit (102) using a main neural network (200), determining a preferred communication mode for a first transmission of data to the second transceiver node (20) and at least one transmission parameter for the first transmission, wherein input to the neural network (200) is based on:

at least a first measurement data value of the at least one environmental parameter from the at least one sensor unit (S1-S5),

a communication channel characteristic for each of the at least two communication modes (110, 120, 130) for a communication channel between the first transceiver node (10) and the second transceiver node (20), and

a network characteristic based on feedback information from one or more node in the underwater communication network.

2. The method according to claim 1, wherein the first transceiver node (10) is configured to transmit data using either one of an acoustic communication mode (110) using an acoustic transducer (114), an electromagnetic communication mode (120) using an electromagnetic transducer (124) and an optical communication mode (130) using an optical transducer (134).

3. The method according to any one of the preceding claims, wherein the at least one sensor unit (S1-S5) is configured to measure a plurality of environmental parameters out of the group of:

temperature at the first transceiver node,
turbidity at the first transceiver node,
pressure at the first transceiver node,
linear acceleration of the first transceiver node,
angular acceleration of the first transceiver node,
ambient magnetic excitation field at the first transceiver node,
conductivity in the water at the first transceiver node.

4. The method according to any one of the preceding claims, wherein the communication channel characteristic comprises at least a first communication channel characteristic for the first communication mode and a second communication channel characteristic for the second communication mode, and wherein each communication channel characteristic comprises an ambient noise frequency spectrum for the respective communication mode.

5. The method according to any one of the preceding claims, wherein the network characteristic comprises feedback data from previous transmissions received by the first transceiver node (10) from a plurality of nodes in the underwater communication system.

6. The method according to claim 5, wherein the feedback data comprises data transmitted to the first transceiver node (10) as a response to a Received Signal Strength Indicator, RSSI, message from the first transceiver node (10).

7. The method according to any one of the preceding claims, wherein the main neural network (200) is provided with a mode availability indicator for each of the at least first and second communication modes (110, 120, 130), and wherein the mode availability indicators each is determined based on the at least one first measurement data value of the at least one environmental parameter from the at least one sensor unit (S1-S5), the communication channel characteristic for each of the at least two communication modes for a communication channel between the first transceiver node (10) and the second transceiver node (20), and the network characteristic based on feedback information from one or more node in the underwater communication network.

8. The method according to claim 7, wherein the at least one first measurement data value is used to determine a channel attenuation model for a communication channel of each communication mode, which channel attenuation model is used for the determination of mode availability indicator,

9. The method according to claim 7 or 8, wherein the communication channel characteristic for each communication mode (110, 120, 130) comprises an energy ambient noise level in said communication channel which is used for the determination of mode availability indicator

10. The method according to any one of claims 7-9, wherein the network characteristic comprises a communication channel identification pulse feedback for a previous transmission between the first transceiver node (10) and the second transceiver node (20) for the communication mode and/or an emission power used for said transmission.

11. The method according to any one of the claims 7-10, wherein the mode availability indicator, for each communication mode (110, 120, 130), is determined using a neural network (300, 400, 500).

12. The method according to any one of the preceding claims, wherein the main neural network (200) is provided with one to four transmission criterions out of the group of data rate efficiency, energy efficiency, range efficiency, and stealth efficiency, wherein the main neural network is configured to maximize the transmission criterions in the selection of communication mode and transmission parameter.

13. The method according to any one of the preceding claims, wherein the data provided to the main neural network (200) is normalized prior to being used by the main neural network.

14. The method according to any one of the preceding claims, wherein the main neural network (200) is further configured to output estimated state values of the parameters being provided to the main neural network.

15. A transceiver node (10) of an underwater communication network configured to transmit data to a second transceiver node (20) in the network using either one of at least a first communication mode using a first transmission unit and a second communication mode using a second transmission unit,

    wherein the first and second communication modes are two different modes out of the group of an acoustic communication mode (110), an electromagnetic communication mode (120), and an optical communication mode (130),
    wherein the first transceiver node (10) comprises or is communicatively connected to at least one sensor unit (S1-S5) configured to measure at least one environmental parameter at the first transceiver node (10), and wherein the first transceiver node comprises a processing unit (102) configured to
    by using a neural network (400), determine a preferred communication mode for a first transmission of data to the second transceiver node and at least one transmission parameter for the first transmission, wherein input to the neural network is based on:

        at least a first measurement data value of the at least one environmental parameter from the at least one sensor unit (S1-S5),
        a communication channel characteristic for each of the at least two communication modes (110, 120, 130) for a communication channel between the first transceiver node (10) and the second transceiver node (20), and
        a network characteristic based on feedback information from one or more node in the underwater communication network.

Fig. 1

Fig. 2

Fig. 3

Fig. 4

Fig. 5

Fig. 6

Fig. 7

Europäisches
Patentamt
European
Patent Office
Office européen
des brevets

**EUROPEAN SEARCH REPORT**

**Application Number**

EP 24 17 2934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG SHANSHAN ET AL: "Efficient Data Collection Scheme for Multi-Modal Underwater Sensor Networks Based on Deep Reinforcement Learning", IEEE TRANSACTIONS ON VEHICULAR TECHNOLOGY, IEEE, USA, vol. 72, no. 5, 26 December 2022 (2022-12-26), pages 6558-6570, XP011940573, ISSN: 0018-9545, DOI: 10.1109/TVT.2022.3232391 [retrieved on 2022-12-27] * the whole document * ----- | 1-15 | INV. H04B11/00 H04B13/02 |
| X | CN 116 242 365 A (UNIV JILIN) 9 June 2023 (2023-06-09) * the whole document * ----- | 1-15 | |
| X | WO 2020/043793 A2 (WFS TECHNOLOGIES LTD [GB]) 5 March 2020 (2020-03-05) * page 9, line 8 - page 10, line 26; claims 1,2,6,15,19; figure 3 * ----- | 1-15 | **TECHNICAL FIELDS SEARCHED (IPC)** H04B H04L |
| X | MOHAMMAD JAHANBAKHT ET AL: "Internet of Underwater Things and Big Marine Data Analytics -- A Comprehensive Survey", ARXIV.ORG, CORNELL UNIVERSITY LIBRARY, 201 OLIN LIBRARY CORNELL UNIVERSITY ITHACA, NY 14853, 12 December 2020 (2020-12-12), XP081836870, * section II.C; figure 1; tables 2,3 * ----- -/-- | 1-15 | |

The present search report has been drawn up for all claims

| Place of search | Date of completion of the search | Examiner |
|---|---|---|
| Munich | 14 October 2024 | Gäde, Sebastian |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 24 17 2934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALGHAMDI RAWAN ET AL: "Toward Immersive Underwater Cloud-Enabled Networks: Prospects and Challenges", IEEE BITS THE INFORMATION THEORY MAGAZINE, IEEE, vol. 3, no. 2, 13 February 2023 (2023-02-13), pages 54-66, XP011976197, ISSN: 2692-4080, DOI: 10.1109/MBITS.2023.3244908 [retrieved on 2023-02-14] * the whole document * ----- | 1-15 | |
| A | ARDELT GUNTHER GUNTHER ARDELT@FHLUEBECK DE ET AL: "A flexible and modular platform for development of short-range underwater communication", PROCEEDINGS OF THE 6TH ACM INTERNATIONAL SYMPOSIUM ON PERVASIVE DISPLAYS, ACMPUB27, NEW YORK, NY, USA, 24 October 2016 (2016-10-24), pages 1-8, XP058934415, DOI: 10.1145/2999504.3001067 ISBN: 978-1-4503-5045-7 * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 14 October 2024 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 2934

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | Publication date |
|---|---|---|---|---|
| CN 116242365 | A | 09-06-2023 | NONE | |
| WO 2020043793 | A2 | 05-03-2020 | NONE | |

EPO FORM P0459

For more details about this annex : see Official Journal of the European Patent Office, No. 12/82